Europäisches Patentamt

**European Patent Office**

**Office européen des brevets**

(11) Publication number: **0 045 555**

**A1**

(12)          **EUROPEAN PATENT APPLICATION**

(21) Application number: **81200873.8**

(22) Date of filing: **04.08.81**

(51) Int. Cl.³: **B 29 B 1/06**

(30) Priority: **06.08.80 IT 5346480**

(43) Date of publication of application:
**10.02.82 Bulletin 82/6**

(84) Designated Contracting States:
**BE DE FR GB NL SE**

(71) Applicant: **GRUPPO VIKITALIA S.p.A.**
**Via Pietro Micca, 10**
**I-10121 Torino(IT)**

(72) Inventor: **Francesco, Natalini**
**Via Tiziano 3**
**I-10126 Torino(IT)**

(74) Representative: **Lotti, Giorgio**
**c/o Ing. Barzano' & Zanardo S.p.A. Via Cernaia 20**
**I-10122 Torino(IT)**

(54) Apparatus for producing a mixture of two or more synthetic components, and for feeding it into closed or open moulds.

(57) An apparatus for producing a mixture of two or more synthetic components and for feeding it into a mould, comprising a mixing chamber (33) with inlet apertures (32) for the individual components and a common aperture (38) in the direction of the mould; there being associated with the mixing chamber (33) a control piston (35) by means of which the mixing of the components can be started or interrupted by opening or closing said apertures (32, 38) respectively. The mixing chamber (33) is confronted by injector support units (11) which can be moved hydraulically in order to define two operating positions, namely a component injection position when the control piston (35) allows mixing to start, and a component recycle position when the control piston (35) interrupts mixing. With the control piston (35) there is associated a second piston (40) mobile between two positions, namely a retracted position in which the outlet of the mixing chamber (33) is open to an extent which can be variably throttled, and an extended position in which the outlet of the mixing chamber (33) is closed and the conduit (38) which runs from this latter to the mould is obstructed.

Fig.1

APPARATUS FOR PRODUCING A MIXTURE OF TWO OR MORE SYNTHETIC
COMPONENTS, AND FOR FEEDING IT INTO CLOSED OR OPEN MOULDS.

0045555

\*\*\*\*\*\*\*\*\*\*\*\*\*

This invention relates to an apparatus for producing a
mixture of two or more synthetic components, and for feeding
it into closed or open moulds.

Apparatus for producing a mixture formed from two or more
synthetic material components and for feeding it into a mould
cavity are known, and comprise a mixing chamber with inlet
apertures for the individual components and a common outlet
aperture in the direction towards the mould.

A preferred embodiment of such apparatus also comprises
a control slide valve associated with the mixing chamber, by
means of which the components flowing from each inlet aperture
can be allowed to meet or can be simultaneously prevented from
meeting, and which, when in its closed position, blocks the
flow of each component towards the outlet.

The object of the invention is to develop and improve
existing apparatus of this type with regard to their operation.

Among the main advantages of the apparatus proposed by the
invention, there is the advantage of ensuring unvaried flow of
the components through the individual injector support units
during the entire operating cycle.

Moreover, as a consequence of the first advantage, during
the cycle there is no pressure variation in the fluid, and thus
the preflow phenomenon, which would occur if the pressure varied,
is reduced to a minimum.

With the proposed apparatus it is possible to individually control each injector support unit to give improved control of the preflow problem, this being particularly felt if the components to be injected are of very viscous type.

Finally, by virtue of the proposed apparatus it is possible to control the pressure in the mixing chamber by throttling the outlet port of the injection chamber. This operation allows improved control of the mixing itself and of its quality, especially in the case of chemical systems with extreme physical characteristics and low total flows.

These and further objects and advantages which will be more apparent hereinafter are attained according to the present invention by an apparatus for producing a mixture of two or more synthetic components and for feeding it into a mould, comprising a mixing chamber with inlet apertures for the individual components and a common aperture in the direction of the mould, there being associated with the mixing chamber a control piston by means of which the mixing of the components can be started or interrupted by opening or closing said apertures respectively, characterised in that the mixing chamber is confronted by injector support units which can be moved hydraulically in order to define two operating positions, namely a component injection position when the control piston allows mixing to start, and a component recycle position when the control piston interrupts mixing; with the control piston there being associated a second piston mobile between two positions, namely a retracted position in which the outlet of the mixing chamber is open to an extent which can be variably throttled, and an extended position in which the outlet of the mixing chamber is closed and the conduit which runs from this latter to the mould is obstructed.

A preferred embodiment is described hereinafter by way of non-limiting example with reference to the accompanying drawings in which:

Figure 1 is a section through the longitudinal axis of the control slide valve of the apparatus, illustrating two different operating positions;

Figure 2 is a section on the line II-II of Figure 1.

The apparatus consists of a central body 10 carrying lateral injector support units 11.   Cylinders 16 of varying cross-section are contained in an outer housing constituted by three sleeves 12, 13 and 14 joined together by means of clamping screws 15.

Into each cylinder 16 there is inserted an injector 17 with its head frontwards, and which is kept urged towards the cylinder end 18 by means of a pressing device constituted by a member 19 also inserted into the cylinder 16, and in which a spring 20 is compressed in order to urge two end pushers 21, one against the injector 17 and the other against a screw 22 for adjusting the compression of the spring 20.

Between the body 10 and the cylinder 16 there are provided conduits 23 for the component entry, and conduits 24 for the exit, i.e. recycling of said components.   The conduits 23 and 24 are connected together by way of the injector 17 and further passage ports 25 provided in the cylinder 16 and sleeve 14.

The cylinder 16 is slidable in its seat by means of a hydraulic command which feeds oil through a central conduit 26 and a branch 27, from the ends of which there branch two passages 28 and 29 which feed the oil either to a front chamber 30 or a rear chamber 31 disposed between the sleeves 12, 13 and 14 and the outer surface of the cylinder 16.

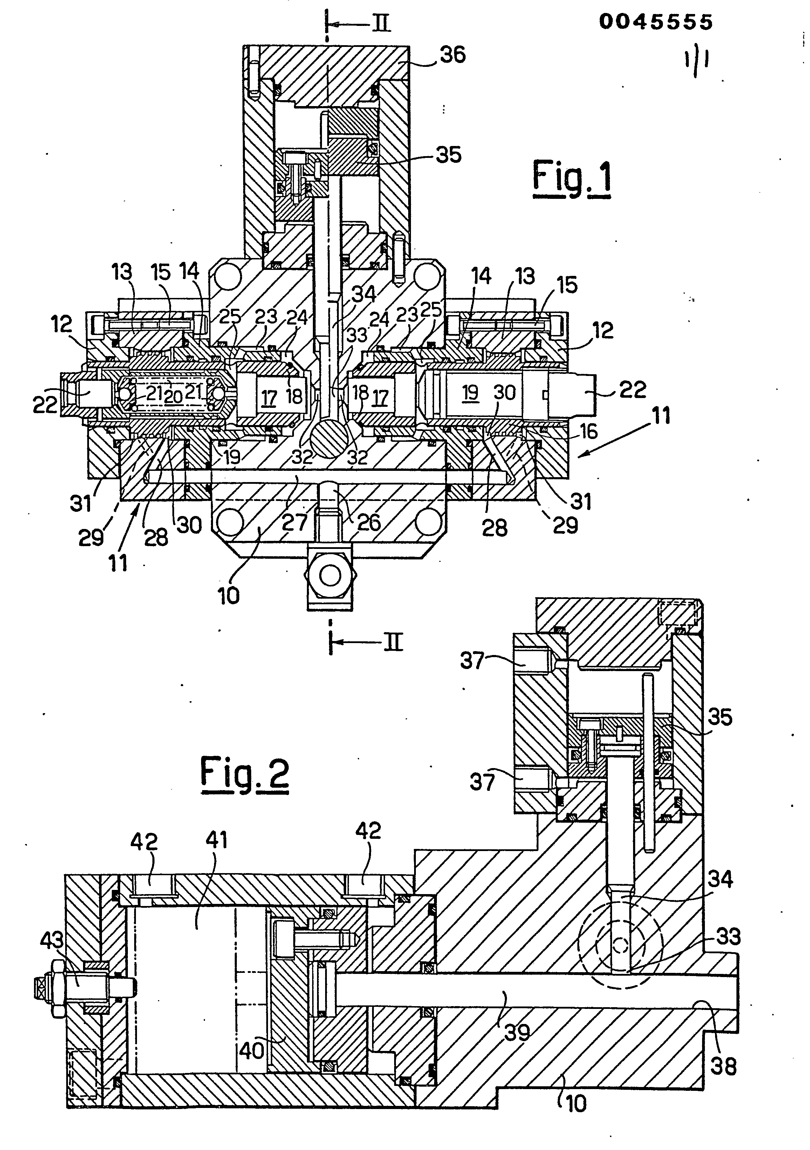

The nozzle of the injector 17 lies in a position corresponding with ports 32 which open into a chamber 33. The chamber 33 is alternately closed and opened by the rod 34 of a piston 35, this latter being slidable in a cylinder 36 by hydraulic feed through the ports 37 (Figure 2).

The chamber 33 is also connected to a conduit 38 provided in the body 10, and which communicates directly with the mould (not shown in the Figure).

The rod 39 of a second piston 40 contained in the cylinder 41 is slidable in the conduit 38. Again in this case, the piston is moved hydraulically by feeding oil through the ports 42.

Finally, a suitably sized screw 43 adjusts the upper limiting position of the piston 40 (shown by dashed lines in Figure 2).

The operation of the apparatus heretofore described is as follows.

At the commencement of each cycle, the piston 40 is in its retracted position (shown by dashed lines in Figure 2), and its rod 39 uncovers the conduit 38 and lies with its end in a position relative to the mixing chamber 33 which is predetermined by the adjustment screw 43. Figure 2 indicates by dashed lines this end position of the rod 39, this position being variable according to requirements.

At the same time, the piston 35 is in its lowered position in Figure 2 and its left hand position in Figure 1.    Its rod 34 therefore completely obstructs the mixing chamber 33.

As shown to the left in Figure 1, the cylinders 16 are retracted by hydraulic feed through the conduits 26, 27 and 28, so that the injectors 17 are withdrawn from the injection ports 32.

Under these conditions, the components injected into each unit 11 are admitted to the mixing head through the relative inlet ports 23 and 25, and after having opened the injectors 17, are returned to their storage vessels through the relative recycle ports 24.  This is because the mixing chamber 33 is closed by the rod 34, as seen.   At this point the injection stage can begin, this corresponding to the position shown to the right of Figure 1.

By means of hydraulic feed, the piston 35 is retracted so that the rod 34 opens the mixing chamber 33.   Simultaneously, by hydraulic feed through the conduits 26, 27 and 29, the injector support cylinders 16 are moved towards each other.

Under these conditions, the recycle paths 24 to the storage vessels are closed, and the injection paths to the mixing chamber 33 are opened.   The injectors 17, which were already properly operating during the preceding recycle stage, now inject the two or more components into the mixing chamber 33.

The mixture thus produced passes through the variable throttle between the chamber 33 and conduit 38, this throttle being provided, as seen, by the rod 39, the end of which is locked in the required position by the screw 43.   There is thus a further advantageous mixing effect on the components, which are discharged through the conduit 38 into the mould at low speed.

When the injection has terminated, the piston 35 is again lowered until its rod 34 shuts off the chamber 33, thus closing the injection ports 32 and removing any residue from the chamber 33.

Simultaneously, by means of hydraulic feed, the injector support cylinders 16 are returned to their initial recycle position, to the left of Figure 1, without interrupting their operation.

The piston 40 is advanced so that the rod 37 removes any injection residue present in the chamber 38.

A new injection cycle can now be started, and proceeds as heretofore described.

WHAT WE CLAIM IS

1. An apparatus for producing a mixture of two or more synthetic components and for feeding it into a mould, comprising a mixing chamber (33) with inlet apertures (32) for the individual components and a common aperture (38) in the direction of the mould, there being associated with the mixing chamber (33) a control piston (35) by means of which the mixing of the components can be started or interrupted by opening or closing said apertures (32, 38) respectively, characterised in that the mixing chamber (33) is confronted by injector support units (11) which can be moved hydraulically in order to define two operating positions, namely a component injection position when the control piston (35) allows mixing to start, and a component recycle position when the control piston (35) interrupts mixing; with the control piston (35) there being associated a second piston (40) mobile between two positions, namely a retracted position in which the outlet of the mixing chamber (33) is open to an extent which can be variably throttled, and an extended position in which the outlet of the mixing chamber (33) is closed and the conduit (38) which runs from this latter to the mould is obstructed.

2. An apparatus as claimed in claim 1, characterised in that the injector support units (11) comprise cylinders (16) slidable in seats (14) and provided internally with resilient means (20) for pressing against the end injectors (17), and provided externally with projections which form compartments (25) with the slide seats for the alternate feed of the liquid which causes the cylinder (16) to move.

3. An apparatus as claimed in claim 2, characterised in that the means for pressing against the injectors (17) are springs (20), at the ends of which there lie the injector (17) and a screw (22) which is adjustable in order to vary the spring tension.

4. An apparatus as claimed in claim 1, characterised in that during the recycle stage of each component the throttle piston (40) is in its retracted position with partial throttling of the outlet (37); the control piston (35) is in its inserted position with its rod (34) completely occupying the mixing chamber (33); and each injector support unit (11) is in its retracted position, with the feed ports (23, 25) from the storage vessel being connected to the injector and the delivery ports (24) from this latter being connected to the storage vessel.

5. An apparatus as claimed in claim 1, characterised in that during the component injection stage, the throttle piston (40) is in its retracted position with partial throttling of the outlet (38); the control piston (35) is in the position in which it is retracted from the mixing chamber (33); and each injector support unit (11) is in its forward position, with the feed ports (23, 25) from the storage vessel to the injector open, the delivery ports (24) from the injector to the storage vessel closed, and the feed ports (32) in the mixing chamber open.

6. An apparatus as claimed in claim 1, characterised in that the throttle piston (40) is extended at the end of the injection stage.

0045555

1/1

Fig.1

Fig.2

European Patent
Office

**EUROPEAN SEARCH REPORT**

Application number

EP 81 20 0873

| | **DOCUMENTS CONSIDERED TO BE RELEVANT** | | | **CLASSIFICATION OF THE APPLICATION (Int. Cl.3)** |
|---|---|---|---|---|
| Category | Citation of document with indication, where appropriate, of relevant passages | Relevant to claim | | |
| X | <u>US - A - 4 115 299</u> (MUHLE)<br>* Figure; column 4 *<br><br>-- | 1,3-6 | | B 29 B 1/06 |
| | <u>GB - A - 2 015 888</u> (AFROS)<br>* Entire document *<br><br>-- | 1 | | |
| | <u>DE - A - 2 065 057</u> (KRAUSS-MAFFEI)<br>* Entire document *<br><br>-- | 1 | | **TECHNICAL FIELDS SEARCHED (Int. Cl.3)** |
| | <u>US - A - 3 975 128</u> (KRAUSS-MAFFEI)<br>* Entire document *<br><br>-- | 1 | | B 29 B 1/00<br>B 29 D 27/00 |
| | <u>US - A - 3 915 438</u> (NEILEY)<br>* Figure 4 *<br><br>---- | 2,3 | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04-11-1981 | KUSARDY |

EPO Form 1503.1   06.78